# FASCICULE DE BREVET EUROPEEN

(11) **EP 2 785 613 B1**
(45) Date de publication et mention de la délivrance du brevet: **02.03.2016**
(21) Numéro de dépôt: 11801798.7
(22) Date de dépôt: 30.11.2011
(51) Int. Cl.: B65D 85/804, A47J 31/36

(54) **CAPSULE À GUIDAGE AMÉLIORÉ POUR PRÉPARATION DE BOISSONS PAR EXTRACTION**
KAPSEL MIT VERBESSERTER FÜHRUNG FÜR DIE ZUBEREITUNG VON GETRÄNKEN DURCH EXTRAKTION
CAPSULE WITH IMPROVED GUIDANCE FOR PREPARING BEVERAGES BY EXTRACTION

(43) Date de publication de la demande: 08.10.2014
(73) Titulaire: Frydman, Alain, 75008 Paris (FR)
(72) Inventeur: Frydman, Alain, 75008 Paris (FR)
(74) Mandataire: Blot, Philippe Robert Emile
(86) Numéro de dépôt international: PCT/FR2011/052826
(87) Numéro de publication internationale: WO 2013/079811

(56) Documents cités:
- WO-A1-2008/014830
- WO-A2-02/074143
- WO-A2-2008/142663
- US-A1- 2003 222 089

## Description

L'invention concerne en général les machines de préparation de boissons par extraction d'une capsule.

Plus précisément, l'invention concerne selon un premier aspect une capsule pour l'extraction d'une boisson, la capsule comprenant une paroi latérale tubulaire ayant un axe central, un fond lié à une première extrémité axiale de la paroi latérale, et une collerette s'étendant autour d'une seconde extrémité axiale de la paroi latérale, la collerette s'étendant dans un plan frontal.

On connaît des machines prévues pour recevoir ce type de capsule. En particulier, EP 2 103 236 décrit une machine à chargement gravitaire. Le dispositif d'introduction de la capsule comporte deux glissières parallèles l'une à l'autre, dans laquelle la collerette de la capsule est introduite. Des butées arrêtent la capsule dans une position intermédiaire, différente de la position d'extraction de la capsule. Quand la partie mobile de la machine est déplacée de sa position ouverte à sa position fermée, la partie mobile prend en charge la capsule pour la déplacer de la position intermédiaire à la position d'extraction, en forçant la collerette de la capsule à passer en dessous des butées.

Il arrive que la capsule se coince au cours de son déplacement de la position intermédiaire à la position d'extraction. Ces coincements proviennent d'un mauvais positionnement de la capsule sur les butées, ou d'une mauvaise prise en charge de la capsule par la partie mobile.

US2003/0222089 A1 décrit une capsule selon le préambule de la revendication 1.

Dans ce contexte, l'invention vise à proposer une capsule permettant d'améliorer la fiabilité des machines à chargement gravitaire.

A cette fin, l'invention porte sur une capsule du type précité, caractérisée en ce que :
- la collerette s'inscrit entre des première et seconde droites s'étendant dans le plan frontal, les première et seconde droites étant parallèles à une même direction déterminée toute la collerette étant située entre ces première et seconde droites, deux zones opposées de la collerette affleurant les première et seconde droites ;
- la capsule comporte des premier et second ergots de blocage s'étendant à partir de la collerette respectivement au-delà des première et seconde droites ;
- l'axe central intercepte le plan frontal en un point central, les premier et second ergots étant décalés d'un premier côté du point central suivant la direction déterminée, avec un écartement supérieur à 1 mm par rapport au point central.

Quand de telles capsules sont introduites dans une machine à chargement gravitaire du type décrit dans EP 2 103 236, la capsule est arrêtée en position intermédiaire par les ergots venant coopérer avec les butées. La largeur de la collerette, c'est-à-dire l'écartement entre les première et seconde droites, est choisie pour que la collerette n'interfère pas avec les butées. Du fait que les ergots sont décalés d'un premier côté du point central suivant la direction déterminée, ledit point central est situé sous les ergots quand la capsule est arrêtée dans sa position intermédiaire.

Ainsi, il est possible d'arrêter la capsule en position intermédiaire à une hauteur, prise suivant la direction verticale, correspondant sensiblement à la hauteur de la capsule en position d'extraction.

Le déplacement de la capsule pour passer de la position intermédiaire à la position d'extraction est alors essentiellement horizontal. Les efforts à appliquer sur la capsule pour la déplacer sont donc extrêmement limités, puisqu'il n'y a pas à forcer la capsule à se déplacer par rapport aux butées, verticalement, sur une hauteur importante, en déformant la collerette au cours de ce mouvement. Le mouvement est pratiquement horizontal, de telle sorte que les butées ne sont pas franchies verticalement en forçant sur la collerette de la capsule pour la déformer. Ainsi, le risque de coincements est réduit.

Comme indiqué ci-dessus, l'écartement suivant la direction déterminée est supérieur à 1 mm par rapport au point central, de préférence compris entre 1 et 20 mm, encore de préférence compris entre 5 et 15 mm, et vaut par exemple 10 mm.

Typiquement, cet écartement correspond à la différence de hauteur entre les butées de la machine, et l'axe central de la capsule en position d'extraction. Cet écartement est fonction de la machine dans laquelle la capsule est destinée à être chargée.

La capsule est prévue pour contenir un produit extractible, tel que du café moulu, du thé, du chocolat ou tout autre produit adapté.

La capsule est réalisée en toutes sortes de matériaux, par exemple en une matière plastique, en un métal, tel que l'aluminium, etc...

La paroi latérale est typiquement à section cylindrique, ou tronconique. Dans ce dernier cas, la paroi latérale converge de la collerette vers le fond.

Le fond est typiquement venu de matière avec la paroi latérale. En variante, le fond est rapporté sur la paroi latérale, et n'est pas venu de matière avec celle-ci. Le fond est typiquement étanche avant chargement dans la machine. En variante, le fond est pré-percé.

La collerette est par exemple venue de matière avec la paroi latérale. En variante, la collerette est rapportée sur la paroi latérale et n'est pas venue de matière avec celle-ci.

Typiquement, la collerette s'étend dans un plan frontal perpendiculaire à l'axe central de la paroi tubulaire. Elle s'étend sur toute la périphérie de la paroi tubulaire.

La collerette fait saillie vers l'extérieur de la capsule par rapport à la paroi latérale. La seconde extrémité axiale de la paroi latérale délimite une ouverture entourée par la collerette. Cette ouverture est typiquement fermée par un opercule. L'opercule est par exemple solidarisé de la collerette par tous moyens adaptés, par exemple par collage ou par soudage thermique. L'opercule peut être constitué de toutes sortes de matériaux, par exemple d'une matière plastique, d'une feuille d'un matériau métallique tel que l'aluminium, etc...

L'opercule est par exemple étanche avant chargement de la capsule dans la machine, ou au contraire est pré-percé. La capsule peut encore comporter un filtre, engagé à l'intérieur de la seconde extrémité de la paroi latérale.

L'opercule, le fond et la paroi latérale délimitent un volume interne de réception du produit extractible.

On entend ici par le fait que la collerette s'inscrit entre les premières et secondes droites le fait que toute la collerette est située entre les première et seconde droites, deux zones opposées de la collerette affleurant les premières et secondes droites. Par exemple, si la collerette a un bord extérieur circulaire, deux zones diamétralement opposées de la collerette sont tangentes aux premières et secondes droites.

La direction déterminée mentionnée ci-dessus correspond typiquement à la direction dans laquelle on introduit la capsule dans les glissières de la machine.

Les ergots sont typiquement venus de matière avec la collerette. En variante, les ergots sont rapportés sur la collerette.

Les premiers et seconds ergots peuvent présenter toutes sortes de formes. Typiquement, ils présentent la même épaisseur que la collerette, l'épaisseur étant prise perpendiculairement au plan frontal. Les ergots font saillie à partir d'un bord périphérique externe de la collerette. Perpendiculairement à l'axe central, ils présentent une section rectangulaire, circulaire, elliptique, arquée, ou toute autre forme adaptée pour coopérer avec les butées de la machine.

Les premiers et seconds ergots de blocage font saillie au-delà des première et seconde droites typiquement sur une largeur adaptée pour permettre un bocage sûr de la capsule quand les ergots viennent en contact avec les butées de la machine. Par exemple, cette largeur est supérieure à 0,1 mm, de préférence supérieure à 1 mm, et vaut par exemple 1, 5 mm.

De préférence, la collerette présente des premier et second bord droits opposés, coïncidant sensiblement avec les première et seconde droites. Ainsi, la collerette est délimitée de deux côtés opposés par des bords droits. Ces bords droits sont prévus pour être engagés dans les glissières de la machine. Ils présentent entre eux un écartement tel qu'ils peuvent être engagés de manière simultanée dans les glissières.

La coopération entre la collerette et les glissières est ainsi meilleure. La capsule est mieux guidée que si la collerette a une forme circulaire. La capsule, une fois engagée dans les glissières, est maintenue dans une position plus proche de la verticale.

De manière à obtenir un guidage efficace, les bords droits s'étendent de préférence sur une longueur au moins égale à la moitié de la dimension de la seconde extrémité axiale de la paroi latérale, prise parallèlement à la direction déterminée.

En variante, la collerette présente une autre forme. Elle est par exemple annulaire, elliptique, rectangulaire,....

Avantageusement, la collerette présente des premières et secondes zones latérales tournées vers les premières et secondes droites, et une zone inférieure située d'un second côté du point central suivant la direction déterminée, le second côté étant opposé au premier, les première et seconde zone latérales présentant respectivement des première et seconde largeurs prises selon une direction transversale perpendiculaire à la direction déterminée, la zone inférieure présentant une troisième largeur supérieure aux première et seconde largeurs, la troisième largeur étant prise suivant la direction déterminée.

Par exemple, les première, seconde et troisième largeurs sont prises au niveau du point central.

Ainsi, la zone inférieure de la collerette présente une partie, notamment un bord externe, qui est plus éloigné du point central que les zones latérales. La collerette a ainsi une forme allongée suivant la direction déterminée. La forme de la collerette indique donc clairement à l'utilisateur le sens dans lequel la capsule doit être introduite dans les glissières de la machine. Par ailleurs, en position intermédiaire de la capsule, cette zone est destinée à coopérer avec une surface d'appui de la machine. Plus précisément, la capsule repose sur ladite surface d'appui par l'intermédiaire de la zone inférieure quand elle occupe sa position intermédiaire. Ceci contribue à limiter l'inclinaison de la capsule en position intermédiaire. L'allongement de la zone inférieure par rapport au point central est déterminé en fonction de la position de la surface d'appui dans la machine où la capsule doit être utilisée.

En effet, le corps de la capsule, constitué de la paroi latérale et du fond, se situe entièrement d'un côté de la collerette. Ainsi, quand la capsule repose sur les butées par l'intermédiaire des ergots, la capsule a tendance à s'incliner du côté du corps.

Le fait de limiter l'inclinaison de la capsule en position intermédiaire est favorable pour éviter les coincements au moment du déplacement de la partie mobile de la machine de la position ouverte vers la position fermée.

Avantageusement, la collerette présente une zone de guidage prolongeant la collerette suivant la direction déterminée du premier côté du point central, au-delà des premier et second ergots.

Ainsi, certaines parties de la zone de guidage, notamment le bord externe, sont plus éloignée du point central que les zones latérales. En d'autres termes, la zone de guidage allonge la capsule suivant la direction déterminée.

Ceci suggère d'abord à l'utilisateur le sens dans lequel la capsule doit être introduite dans les glissières. Par ailleurs, notamment quand la capsule comporte à la fois la zone de guidage et une zone inférieure allongée, il n'est pas possible pour l'utilisateur d'engager la zone de guidage et la zone inférieure dans les glissières, c'est-à-dire d'engager la capsule à 90° par rapport au sens d'introduction normal.

De plus, ceci augmente encore la dimension de la collerette suivant la direction déterminée, et donc améliore le guidage de la capsule dans les glissières. Cela limite l'inclinaison de la capsule en position intermédiaire.

Ceci est particulièrement vrai si la zone de guidage de la collerette présente une largeur transversale importante, en tout état de cause suffisante pour que cette zone de guidage soit engagée dans les deux glissières de la machine.

A cette fin, si la seconde extrémité de la paroi latérale présente au niveau du point central une quatrième largeur transversale, alors la zone de guidage présente avantageusement une cinquième largeur transversale supérieure à la quatrième largeur transversale.

De préférence, cette cinquième largeur est comprise entre la quatrième largeur et la largeur transversale séparant les deux bords droits de la collerette.

La zone de guidage n'est pas considérée ici comme faisant partie de la collerette. On entend par ici par collerette seulement la bande annulaire de matière s'étendant dans le plan frontal et disposée immédiatement autour de la seconde extrémité de la paroi latérale. La zone de matière s'étendant au-delà des premier et second ergots n'est pas considérée comme faisant partie de la collerette. Notamment, cette zone de matière peut présenter une largeur transversale supérieure à celle de la collerette, puisqu'elle n'a pas à passer entre les butées de la machine. Cette zone de matière pourrait présenter une largeur transversale égale à la largeur transversale de la capsule prise au niveau des deux ergots.

Selon un second aspect, l'invention porte sur un ensemble comprenant une capsule ayant les caractéristiques ci-dessus, et une machine de préparation de boissons par extraction de capsules. La capsule est adaptée pour pouvoir être chargée gravitairement dans la machine de préparation de boissons.

Comme indiqué plus haut, la machine comprend de préférence :
- une partie fixe ;
- une partie mobile par rapport à la partie fixe, entre une position ouverte dans laquelle la capsule peut être chargée gravitairement dans la machine et une position fermée dans laquelle les parties fixes et mobiles maintiennent la capsule dans une position d'extraction dans laquelle une boisson est susceptible d'être préparée par extraction de la capsule, la capsule en position d'extraction étant située à une première hauteur déterminée suivant la direction verticale ;
- un dispositif d'introduction dans la capsule gravitairement dans la machine, le dispositif d'introduction comprenant des organes de blocage coopérant avec les ergots de la capsule pour bloquer la capsule dans une position intermédiaire ;
- les deux ergots étant décalés du premier côté du point central suivant la direction déterminée, avec un écartement par rapport au point central choisi pour qu'en position intermédiaire la capsule soit située suivant la direction verticale à une seconde hauteur comprise entre la première hauteur moins 4 mm d'une part et la première hauteur plus 4 mm d'autre part.

Ainsi, une fois chargée, la capsule dans sa position intermédiaire est située sensiblement à la même hauteur que dans sa position à l'extraction. La seconde hauteur est de préférence comprise entre la première hauteur moins 4 mm d'une part et la première hauteur plus 4 mm d'autre part, de préférence entre la première hauteur moins 2 mm et la première hauteur plus 2 mm, et encore de préférence entre la première hauteur moins 0,5 mm et la première hauteur plus 0,5 mm. Avantageusement, la position intermédiaire est située à la même hauteur, suivant la direction verticale, que la position d'extraction. Les premières et secondes hauteurs sont typiquement prises suivant la direction verticale quand la machine repose sur une surface horizontale.

Les premières et secondes hauteurs de la capsule sont prises en considérant un point de référence de la capsule, par exemple le point central.

Typiquement, le dispositif d'introduction comprend deux glissières, prévues pour guider la collerette de la capsule lors de son chargement gravitaire.

Dans ce cas, les organes de blocage sont typiquement des reliefs prévus dans les glissières ou en dessous des glissières.

Les organes de blocage peuvent être de tous types et de toutes formes.

De préférence, les organes de blocage délimitent entre eux un passage d'une largeur déterminée, les premières et secondes droites entre lesquelles s'inscrit la collerette présentant entre elles un écartement inférieur à ladite largeur. Ainsi, la collerette n'interfère pas avec les butées au moment du chargement.

En revanche, les deux glissières présentent des ouvertures tournées l'une vers l'autre, les deux ouvertures présentant entre elles un écartement transversal déterminé, les premières et secondes droites présentant entre elles un écartement supérieur audit écartement transversal déterminé.

Ainsi, certaines zones de la collerette sont engagées dans la glissière, ce qui facilite le guidage du mouvement de la capsule.

Avantageusement, la machine comprend une surface prévue pour supporter une zone inférieure de la collerette quand la capsule est en position intermédiaire.

Comme indiqué plus haut, ceci permet de placer la capsule dans une orientation où la collerette est proche de la verticale, ce qui limite le risque de coincement quand la capsule est déplacée de la position intermédiaire à la position d'extraction par la partie mobile.

Typiquement, la partie fixe de la machine comporte une grille de sortie pour la boisson. La collerette de la capsule est plaquée contre cette grille en position d'extraction, ou est bloquée légèrement écartée de cette grille. La surface de support est typiquement située immédiatement sous la grille. Elle est inclinée vers le bas à partir de la grille.

De préférence, la position d'extraction de la capsule se déduit de la position intermédiaire par une translation suivant une direction déterminée, de préférence sensiblement horizontale. Une telle disposition est favorable pour permettre un déplacement facile de la capsule de sa position intermédiaire à sa position d'extraction.

Avantageusement, il existe un espace entre les extrémités inférieures des glissières et les butées. En d'autres termes, les butées sont placées verticalement à distance sous les extrémités inférieures des glissières. Cet espace permet le passage des ergots de la capsule au cours du déplacement de la capsule de sa position intermédiaire à sa position d'extraction. Typiquement, la machine est adaptée pour que la capsule soit entraînée de la position intermédiaire à la position d'extraction par la partie mobile se déplaçant de sa position ouverte à sa position fermée.

La partie fixe de la machine comporte une grille contre laquelle la capsule est maintenue en appui en position d'extraction, les organes de blocages étant séparées de la grille par un interstice prévu pour l'évacuation gravitaire de la capsule après extraction.

D'autres caractéristiques et avantages de l'invention ressortiront de la description détaillée qui en est donnée ci-dessous, à titre indicatif et non limitatif, en référence aux figures annexées, parmi lesquelles :
- la figure 1 est une représentation schématique, de côté, de la séquence de chargement et d'évacuation d'une capsule conforme à l'invention dans une machine à chargement gravitaire, la capsule étant du type représenté sur la Figure 5 ;
- la figure 2 est une vue en perspective d'une capsule conforme à un premier mode de réalisation de l'invention ;
- la figure 3 est une vue de face de la collerette et des ergots de la capsule de la figure 2 ;
- la figure 4 est une vue de dessus du dispositif d'introduction de la machine de la figure 1 ;
- la figure 5 est une vue en perspective d'un second mode de réalisation de la capsule ;
- la figure 6 est une vue similaire à celle de la figure 1, pour une variante de réalisation de la capsule.

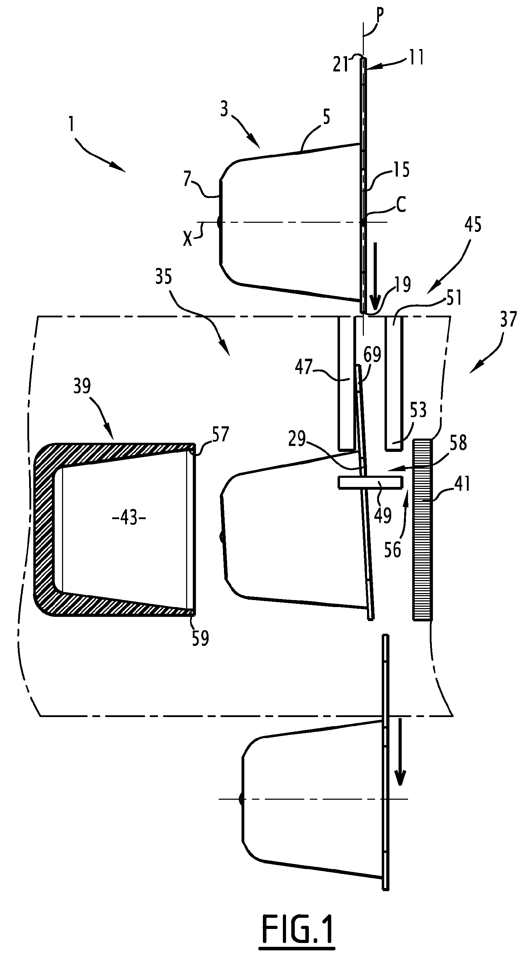

La machine 1 représentée sur la figure 1 est une machine de préparation de boissons par extraction d'une capsule 3. Un exemple de capsule 3 est représenté de manière plus précise sur la figure 1. La capsule 3 comporte une paroi périphérique tubulaire 5 de forme tronconique et d'axe central X, un fond 7 fermant une première extrémité axiale de la paroi 5, et une collerette 11 s'étendant autour d'une seconde extrémité axiale de la paroi 5. La paroi tronconique 5 va en s'évasant du fond 7 vers la collerette 11.

La collerette 11 est solidaire de la paroi 5. Elle s'étend dans un plan frontal P sensiblement perpendiculaire à l'axe X (Figure 1). Elle entoure la seconde extrémité de la paroi 5 sur toute sa périphérie, et fait saillie radialement vers l'extérieur par rapport à la paroi 5. La paroi latérale 5 et le fond 7 sont disposés entièrement d'un côté du plan P.

La capsule 5 est fermée au niveau de la seconde extrémité de la paroi 5 par un filtre, qui n'est pas visible sur les figures. Le filtre délimite avec la paroi 5 et le fond 7 un volume interne contenant le produit extractible, qui est par exemple du café moulu.

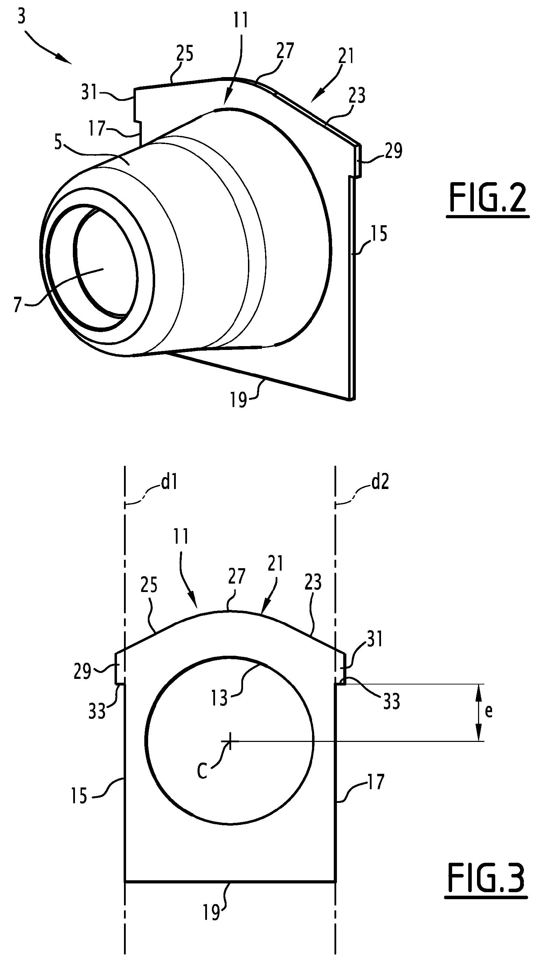

Comme visible sur les figures 1 et 3, la collerette 11 n'est pas circulaire.

Plus précisément, la collerette 11 est délimitée radialement vers l'intérieur par un bord circulaire 13, correspondant à la ligne de jonction avec la paroi périphérique 5. Vers l'extérieur, la collerette 11 est délimitée par des premiers et seconds bords droits longitudinaux 15 et 17, un bord droit transversal 19 raccordant les premier et second bords 15 et 17 l'un à l'autre, et un bord transversal 21 en V, raccordant les bords 15 et 17 l'un à l'autre.

Les premier et second bords 15 et 17 sont rectilignes et parallèles l'un à l'autre. Ils délimitent deux côtés opposés de la collerette. Le bord 19 est lui aussi rectiligne, et perpendiculaire aux premier et second bords longitudinaux 15 et 17. Il délimite un côté inférieur de la collerette 11. Le bord transversal 21 pointe radialement vers l'extérieur de la collerette. Il délimite cette collerette d'un côté supérieur. Il présente deux tronçons latéraux 23 et 25, sensiblement rectilignes et inclinés l'un par rapport à l'autre, raccordés par un tronçon central 27 légèrement arqué.

Par ailleurs, la capsule 3 comporte des premiers et seconds ergots de blocage 29 et 31. Comme visible sur la figure 3, la collerette s'inscrit entre des première et seconde droites d1 et d2 s'étendant dans le plan frontal, les première et seconde droites étant parallèles à la direction longitudinale. Les droites d1 et d2 coïncident avec les premier et second bords longitudinaux 15 et 17.

Les premier et second ergots 29 et 31 s'étendent à partir de la collerette 11 au-delà des première et seconde droites d1 et d2. Ainsi, les premier et second ergots 29 et 31 font saillie à partir des premier et second bords longitudinaux 15 et 17, transversalement vers l'extérieur de la capsule au-delà des première et seconde droites d1 et d2.

Les premier et second ergots 29 et 31 sont situés à une extrémité supérieure des premier et second bords longitudinaux 15 et 17, au niveau de la jonction de ces bords avec le bord transversal 21.

Ainsi, les premier et second ergots 29, 31 sont décalés vers le côté supérieur par rapport au point central C. Le point C correspond à l'intersection entre l'axe central X et le plan frontal P. Le point C constitue le centre géométrique du bord circulaire 13.

Suivant la direction longitudinale, les ergots 29 et 31 sont décalés par rapport au point central C du côté supérieur, avec un écartement d'environ 10 mm. L'écartement e est matérialisé sur la figure 3. Il correspond à la distance entre les bords 33 des ergots tournés vers le bord inférieur 19 et le point central C, prise longitudinalement.

Dans l'exemple des figures 2 et 3, les ergots ont une forme sensiblement rectangulaire.

La machine 1 est du type à chargement gravitaire et à évacuation gravitaire. Comme visible sur la figure 1, elle comporte un puits 35 permettant l'introduction de la capsule verticalement dans la machine, selon un mouvement allant du haut vers le bas. Après extraction de la capsule, cette capsule tombe dans un bac de collecte des capsules usées, non représenté. Ce bas est placé en partie basse de la machine, sous le puits de chargement. La capsule usagée tombe dans le bac gravitairement.

La machine comporte une partie fixe 37 et une partie mobile 39 par rapport à la partie fixe 37, entre une position ouverte représentée sur la figure 1 et une position fermée (non représentée). La partie fixe comprend, entre autres, une grille 41 prévue pour laisser passer la boisson préparée par extraction de la capsule. Après passage à travers la grille 41, la boisson s'écoule dans un récipient placé par l'utilisateur sous la machine. Le canal de circulation de la boisson en aval de la grille 41 n'est pas représenté.

La partie mobile 39, comme visible sur la figure 1, délimite intérieurement un logement 43 prévu pour recevoir le fond 7 et la paroi périphérique 5 de la capsule.

Dans la position ouverte de la partie mobile 39, la capsule 3 peut être chargée gravitairement dans la machine 1. Dans cette position ouverte, la partie mobile 39 est écartée de la grille 41.

Dans la position fermée, les parties fixe 37 et mobile 39 maintiennent la capsule 3 dans une position d'extraction dans laquelle une boisson est susceptible d'être préparée par extraction de la capsule. Dans cette position fermée, la partie mobile 39 est proche de la grille 41. Le fond 7 et la paroi latérale 5 de la capsule sont engagés dans le logement 43. La collerette 11 est pincée entre la partie mobile et la partie fixe, avec éventuellement interposition d'autres éléments. Ainsi, la partie mobile 39 se déplace de sa position ouverte à sa position fermée selon un mouvement qui la rapproche de la partie fixe 37 et plus précisément de la grille 41.

La machine 1 comporte encore un mécanisme permettant de commander le déplacement de la partie mobile 39 entre ses positions ouverte et fermée, non représentées.

La machine 1 comporte encore un dispositif non représenté permettant d'alimenter le logement 43 avec un fluide, par exemple de la vapeur d'eau. La vapeur d'eau, en traversant la capsule, réalise l'extraction du produit stocké dans la capsule, ce qui produit la boisson.

La machine peut encore comporter des moyens mécaniques, tels que des lames ou des picots, permettant de créer une zone d'entrée de fluide par perçage du fond 7 de la capsule et une zone de sortie de fluide par perçage de la face frontale de la capsule. Le perçage intervient quand la capsule 3 est pincée entre les parties fixe et mobile.

Ces moyens ne sont pas représentés.

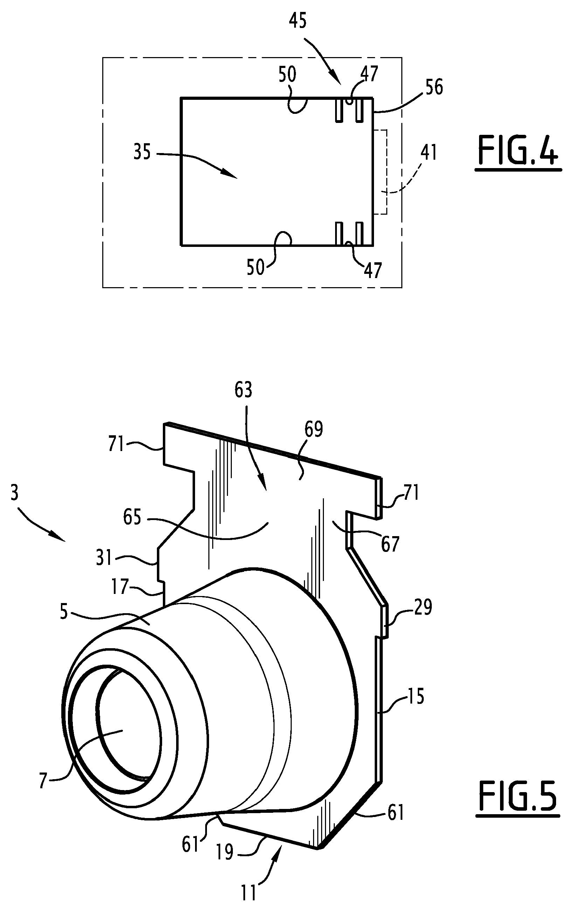

Le puits de chargement 35 est ouvert vers le haut et vers le bas, pour permettre le chargement et l'évacuation de la capsule. Par ailleurs, la machine 1 comporte un dispositif 45 d'introduction de la capsule gravitairement dans la machine. Ce dispositif, visible notamment sur les figures 1 et 4, comporte deux glissières 47 disposées dans le puits de chargement 35, et deux organes de blocage 49 disposés sous les glissières.

Les deux glissières 47 sont d'orientation verticale. Elles sont formées sur deux parois 50 opposées, en vis-à-vis, du puits de chargement. Elles sont placées dans un même plan vertical, et sont ouvertes l'une vers l'autre. Elles présentent chacune des extrémités supérieure 51 et inférieure 53 ouvertes suivant la direction verticale.

Les organes de blocage 49 sont des reliefs formés dans les parois 50 du puits de chargement 35. Les organes de blocage 49 sont placés sous les extrémités inférieures 53 des deux glissières, un espace 58 séparant les reliefs 49 des extrémités inférieures 53.

Les reliefs 49 et les glissières 47 sont séparés de la grille 41 par un interstice 56.

La procédure de chargement et d'évacuation de la capsule va maintenant être détaillée.

L'utilisateur, après avoir éventuellement retiré l'opercule fermant la face de sortie de la capsule, introduit la capsule dans les glissières 47.

Pour cela, il place d'abord la capsule 3 dans une orientation telle que la collerette 11 soit dans un plan vertical, parallèle au plan contenant les glissières. Il place le bord transversal inférieur 19 vers le bas et le bord transversal supérieur 21 vers le haut. La capsule étant dissymétrique, notamment du fait de la présence des ergots 29 et 31, et du fait de la différence de forme entre les bords transversaux 19 et 21, l'utilisateur sait parfaitement dans quel sens placer la capsule.

Il introduit ensuite les deux bords longitudinaux 15 et 17 respectivement dans les deux glissières 47. Il lâche ensuite la capsule, qui tombe gravitairement à l'intérieur du puits de chargement 35 de la machine. Les bords longitudinaux 15 et 17 coopèrent avec les glissières 47 pour guider le mouvement vertical de la capsule.

Les reliefs 49 arrêtent la capsule dans une position intermédiaire, représentée sur la figure 1. Le mouvement de la capsule est en effet arrêté par les premier et second ergots 29 et 31, venant en butée contre les reliefs 49.

L'écartement entre les deux reliefs 49 est supérieur à l'écartement entre les premier et second bords longitudinaux 15 et 17, mais est inférieur à la largeur transversale de la capsule prise au niveau des ergots de blocage 29 et 31.

Dans la position intermédiaire, la capsule est située, suivant la direction verticale, à une hauteur correspondant sensiblement à la hauteur de la capsule dans sa position d'extraction. La hauteur est prise ici comme correspondant à la position du point central C, suivant la direction verticale, par rapport à une surface de référence non représentée qui peut être la base de la machine.

En position intermédiaire, la capsule est légèrement inclinée, comme visible sur la figure 1. En d'autres termes, la collerette 11 se trouve dans un plan formant un angle par rapport au plan vertical, l'axe central X étant lui aussi légèrement incliné par rapport au plan horizontal.

L'utilisateur déplace ensuite la partie mobile 39 de sa position ouverte à sa position fermée en actionnant le mécanisme correspondant. La partie mobile 39 se déplace alors vers la grille 41. Comme illustré sur la figure 1, le logement 43 de la partie mobile présente une ouverture 57 tournée vers la grille 41, délimité par un bord libre 59. La partie mobile 39 vient s'adapter autour de la capsule 3 en position intermédiaire, le fond 7 de la capsule pénétrant dans le logement par l'ouverture 57. Le bord libre 59 vient porter au cours de ce mouvement contre la collerette 11. La partie mobile 39 pousse la capsule vers la grille 41. Les premier et second ergots 29 et 31 passent dans les espaces 58 existants entre les extrémités inférieures 53 des glissières et les reliefs 49. Le mouvement de la capsule 3 est arrêté quand la collerette 11 vient en butée contre la grille 41. La capsule 3 se trouve alors en position d'extraction. Le déplacement de la capsule de sa position intermédiaire à sa position d'extraction est une translation. Cette translation s'effectue selon une direction sensiblement perpendiculaire à la grille 41. Elle est sensiblement horizontale.

Après extraction de la capsule par le fluide fourni par la machine, l'utilisateur déplace la partie mobile 39 de la machine de sa position fermée à se position ouverte, selon un mouvement inverse du mouvement de fermeture.

La capsule 3 reste en place dans sa position d'extraction dans un premier temps. Une fois que le fond 7 de la capsule n'est plus engagé dans le logement 43, la capsule est libre de tomber dans le bac de réception prévu à cet effet dans la machine. La collerette 11 glisse le long de l'interstice 56 existant entre la grille 41 d'une part, et les glissières 47 ainsi que les reliefs 49 d'autre part.

Un second mode de réalisation de la capsule va maintenant être décrit, en référence à la figure 5. Seuls les points par lesquels la capsule de la figure 5 diffère de celle des figures 2 et 3 seront détaillées ci-dessous. Les éléments identiques, ou assurant la même fonction dans les deux modes de réalisation, seront désignés les mêmes références.

Dans le mode de réalisation de la figure 5, les coins inférieurs de la collerette 11, à la jonction du bord transversal 19 avec les premier et second bords longitudinaux 15 et 17, sont coupés. Ainsi, le bord transversal inférieur 19 est raccordé aux premier et second bords longitudinaux 15 et 17 par deux bords inclinés 61. La partie inférieure de la collerette converge vers le bord transversal inférieur 19, suggérant à l'utilisateur le sens d'introduction de la capsule dans les glissières de la machine.

Par ailleurs, la capsule comporte une zone supérieure de guidage 63, solidaire de la collerette 11. La zone 63 s'étend dans le même plan frontal que la collerette 11. Elle prolonge la collerette 11 du côté supérieur. La zone 63 prolonge la collerette 11 longitudinalement au-delà des ergots 29 et 31.

Comme visible sur la figure 4, la zone de guidage 63 comporte, à partir de la collerette 11, une première zone 65 de largeur transversale décroissante, puis une seconde zone 67 de largeur transversale constante, puis une troisième zone 69 de largeur transversale élargie.

La première zone 65 s'étend à sa base sur toute la largeur transversale de la collerette 11, de l'ergot 29 à l'ergot 31. La première zone 65 présente une largeur transversale qui décroit jusqu'à la seconde zone 67. La troisième zone 69 délimite une extrémité supérieure de la capsule. Latéralement, elle est délimitée par deux bords longitudinaux droits 71, sensiblement parallèles l'un à l'autre, alignés avec les premier et second bords longitudinaux 15 et 17. La troisième zone 69 présente transversalement une largeur supérieure à celle de la seconde zone 67. La troisième zone 69 est engagée dans les glissières 47 quand la capsule occupe sa position intermédiaire, comme représenté sur la figure 1. Du fait que la zone de guidage 63 présente une hauteur longitudinale importante, l'inclinaison de la capsule par rapport à la verticale en position intermédiaire est réduite. En effet, la troisième zone 69 vient en appui contre les parois des glissières, ce qui limite l'inclinaison du plan frontal par rapport au plan vertical.

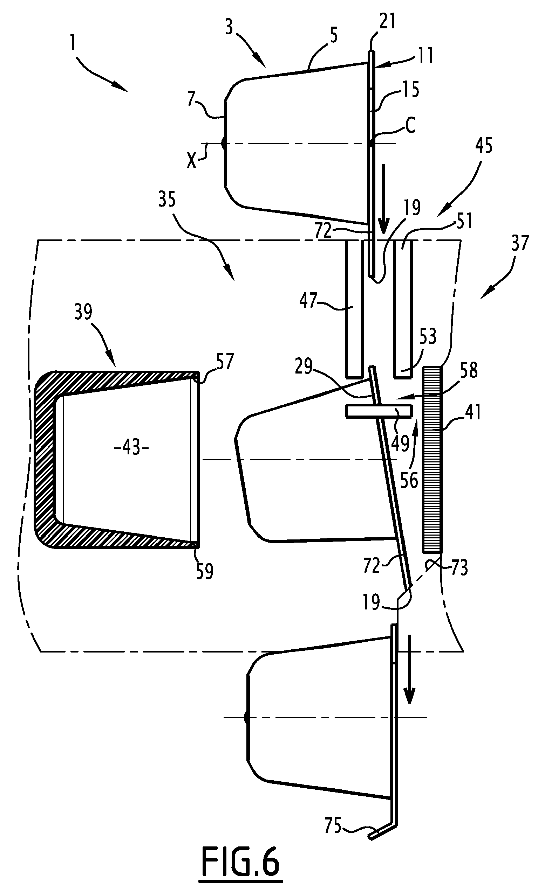

Un troisième mode de réalisation de la capsule va maintenant être décrit en référence à la figure 6. Seuls les points par lesquels le troisième mode de réalisation diffère du premier seront détaillés ci-dessous. Les éléments identiques ou assurant la même fonction dans les deux modes de réalisation seront désignés par les mêmes références.

Dans ce troisième mode de réalisation, la collerette 11 présente une zone inférieure 72, située du côté inférieur du point central C, plus large que dans le mode de réalisation de la figure 2. En d'autres termes, la largeur de la collerette prise entre le bord intérieur 13 et le bord transversal inférieur 19 au niveau du point C , est plus grande dans le mode de réalisation de la figure 6 que dans le mode de réalisation des figures 1 à 4. La zone inférieure 72 est plus large que les zones latérales de la collerette. Par ailleurs, la machine comporte sous la grille 41 une surface d'appui 73, destinée à coopérer avec le bord transversal 19 de la collerette quand celle-ci occupe sa position intermédiaire. Comme visible sur la figure 6, la surface d'appui 73 est inclinée vers le bas et vers les glissières 47 à partir de la grille 41. La surface 73 est située directement sous l'interstice 56.

Quand la capsule occupe sa position intermédiaire, comme représenté sur la figure 6, les premier et second ergots 29 et 31 sont en appui sur les reliefs 49, et la zone inférieure 72 de la collerette est en appui sur la surface 73. Ceci permet de limiter l'inclinaison du plan frontal de la capsule, c'est-à-dire de la collerette 11, par rapport au plan vertical.

Quand la partie mobile 39 se déplace de sa position ouverte à sa position fermée, la zone inférieure 72 de la collerette est partiellement plaquée contre la surface d'appui 73 et se déforme légèrement. Une partie 75 de cette zone inférieure adopte l'orientation de la surface 73 et est inclinée par rapport au plan frontal.

Après extraction, quand la partie mobile revient de sa position fermée à sa position ouverte, la partie déformée 75 de la collerette glisse le long de la surface 73 pendant que la collerette tombe dans le bac de collecte des capsules usées.

## Revendications

1. Capsule pour l'extraction d'une boisson, la capsule (3) comprenant une paroi latérale (5) tubulaire ayant un axe central (X), un fond (7) lié à une première extrémité axiale de la paroi latérale (5), et une collerette (11) s'étendant autour d'une seconde extrémité axiale de la paroi latérale (5), la collerette (11) s'étendant dans un plan frontal, où
- la collerette (11) s'inscrit entre des première et seconde droites (d1, d2) s'étendant dans le plan frontal, les première et seconde droites (d1, d2) étant parallèles à une même direction déterminée, toute la collerette (11) étant située entre ces première et seconde droites (d1, d2), deux zones opposées de la collerette (11) affleurant les première et seconde droites (d1, d2)
**caractérisée en ce que**
- la capsule comporte des premier et second ergots de blocage (29, 31) s'étendant à partir de la collerette (11) respectivement au-delà des première et seconde droites (d1, d2) ;
- l'axe central (X) intercepte le plan frontal en un point central (C), les premier et second ergots (29, 31) étant décalés d'un premier côté du point central (C) suivant la direction déterminée, avec un écartement supérieur à 1 mm par rapport au point central.

2. Capsule selon la revendication 1, **caractérisée en ce que** la collerette (11) présente des premier et second bords droits (15, 17) opposés, coïncidant sensiblement avec les première et seconde droites (d1, d2).

3. Capsule selon la revendication 1 ou 2, **caractérisée en ce que** la collerette (11) présente des première et seconde zones latérales tournées vers les première et seconde droites (d1, d2) et une zone inférieure (72) située d'un second côté du point central (C) suivant la direction déterminée, le second côté étant opposé au premier, les première et seconde zones latérale présentant respectivement des première et seconde largeurs prises selon une direction transversale perpendiculaire à la direction déterminée, la zone inférieure (72) présentant une troisième largeur supérieure aux première et seconde largeurs, la troisième largeur étant prise suivant la direction déterminée.

4. Capsule selon l'une quelconque des revendications 1 à 3, **caractérisée en ce qu'**elle comprend une zone de guidage (63) prolongeant la collerette (11) suivant la direction déterminée du premier côté du point central (C), au-delà des premier et second ergots (29, 31).

5. Capsule selon la revendication 4, **caractérisée en ce que** la seconde extrémité de la paroi latérale (5) présente au niveau du point central (C) une quatrième largeur prise selon une direction transversale perpendiculaire à la direction déterminée, la zone de guidage (63) présentant une cinquième largeur prise selon la direction transversale supérieure à la quatrième largeur.

6. Ensemble comprenant une machine de préparation de boisson (1) par extraction de capsule, et une capsule (3) selon l'une quelconque des revendications précédentes.

7. Ensemble selon la revendication 6, **caractérisé en ce que** la machine comprenant :
- une partie fixe (37) ;
- une partie (39) mobile par rapport à la partie fixe (37), entre une position ouverte dans laquelle la capsule (3) peut être chargée gravitairement dans la machine (1) et une position fermée dans laquelle les parties fixe et mobile (37, 39) maintiennent la capsule (3) dans une position d'extraction dans laquelle une boisson est susceptible d'être préparée par extraction de la capsule (3), la capsule (3) en position d'extraction étant située à une première hauteur déterminée suivant la direction verticale ;
- un dispositif (35) d'introduction de la capsule (3) gravitairement dans la machine (1), le dispositif d'introduction (35) comprenant des organes de blocage (49) coopérant avec les ergots (29, 31) de la capsule (3) pour bloquer la capsule (3) dans une position intermédiaire ;
les deux ergots (29, 31) étant décalés du premier côté du point central (C) suivant la direction déterminée, avec un écartement par rapport au point central (C) choisi pour qu'en position intermédiaire la capsule (3) soit située suivant la direction verticale à une seconde hauteur comprise entre la première hauteur moins 4 mm d'une part et la première hauteur plus 4 mm d'autre part.

8. Ensemble selon la revendication 7, **caractérisé en ce que** le dispositif de chargement (35) comprend deux glissières (47) prévues pour guider la collerette (11) de la capsule (3) lors de son chargement gravitaire.

9. Ensemble selon la revendication 7 ou 8, **caractérisé en ce que** les deux organes de blocage (49) présentent entre eux un passage ayant une largeur déterminée, les première et deuxième droites (d1, d2) présentant entre elles une largeur inférieure à ladite largeur déterminée.

10. Ensemble selon l'une quelconque des revendications 7 à 9, **caractérisé en ce que** chaque glissière (47) présente une extrémité supérieure (51) d'introduction des capsules (3) et une extrémité inférieure (53) opposée à l'extrémité supérieure, les organes de blocage (49) étant placés dans le prolongement des glissières (47) et étant séparés des extrémités inférieures (53) des glissières (47) par un espace (58) prévu pour le passage des premier et second ergots (29, 31).

11. Ensemble selon l'une quelconque des revendications 7 à 10, **caractérisé en ce que** la partie fixe (37) de la machine (1) comporte une grille (41) contre laquelle la capsule (3) est maintenue en appui en position d'extraction, les organes de blocages (49) étant séparées de la grille (41) par un interstice (56) prévu pour l'évacuation gravitaire de la capsule (3) après extraction.

12. Ensemble selon l'une quelconque des revendications 7 à 11, **caractérisé en ce que** la machine (1) comprend une surface (73) prévue pour supporter une zone inférieure (72) de la collerette (11) quand la capsule (3) est en position intermédiaire.

13. Ensemble selon l'une quelconque des revendications 7 à 12, **caractérisé en ce que** la position d'extraction de la capsule (3) se déduit de la position intermédiaire par une translation suivant une direction déterminée, de préférence sensiblement horizontale.

14. Ensemble selon l'une quelconque des revendications 7 à 13, **caractérisé en ce que** la machine (1) est adaptée pour que la capsule (3) soit entraînée de la position intermédiaire à la position d'extraction par la partie mobile (39) se déplaçant de sa position ouverte à sa position fermée.

## Patentansprüche

1. Kapsel für die Extraktion eines Getränks, wobei die Kapsel (3) eine rohrförmige Seitenwand (5) mit einer zentralen Achse (X), einen mit einem ersten axialen Ende der Seitenwand (5) verbundenen Boden (7) und einen Kragen (11), der sich um ein zweites axiales Ende der Seitenwand (5) erstreckt, umfasst, wobei sich der Kragen (11) in einer frontalen Ebene erstreckt, wobei:
- der Kragen (11) zwischen einer ersten und zweiten Geraden (d1, d2) verläuft, die sich in der frontalen Ebene erstrecken, wobei die erste und zweite Gerade (d1, d2) in einer selben bestimmten Richtung parallel sind, wobei sich der gesamte Kragen (11) zwischen dieser ersten und zweiten Geraden (d1, d2) befindet, wobei zwei dem Kragen (11) gegenüberliegende Zonen an der ersten und zweiten Geraden (d1, d2) anliegen,
**dadurch gekennzeichnet, dass**
- die Kapsel einen ersten und zweiten Blockiervorsprung (29, 31) aufweist, die sich ab dem Kragen (11) beziehungsweise jenseits der ersten und zweiten Geraden (d1, d2) erstrecken,
- die zentrale Achse (X) die frontale Ebene in einem zentralen Punkt (C) abfängt, wobei der erste und zweite Vorsprung (29, 31) von einer ersten Seite des zentralen Punkts (C) gemäß einer bestimmten Richtung mit einem Abstand größer als 1 mm im Verhältnis zum zentralen Punkt versetzt sind.

2. Kapsel nach Anspruch 1, **dadurch gekennzeichnet, dass** der Kragen (11) einen ersten und zweiten gegenüberliegenden geraden Rand (15, 17) aufweist, der mit der ersten und zweiten Geraden (d1, d2) zusammenfällt.

3. Kapsel nach Anspruch 1 oder 2, **dadurch gekennzeichnet, dass** der Kragen (11) eine erste und zweite seitliche Zone aufweist, die zu der ersten und zweiten Geraden (d1, d2) zeigen, und eine untere Zone (72), die sich auf einer zweiten Seite des zentralen Punkts (C) gemäß einer bestimmten Richtung befindet, wobei die zweite Seite der ersten gegenüberliegt, wobei die erste und zweite seitliche Zone jeweils eine erste und zweite Breite aufweisen, gemessen senkrecht zu der bestimmten Richtung gemäß einer Querrichtung, wobei die untere Zone (72) eine dritte Breite aufweist, die größer als die erste und zweite Breite ist, wobei die dritte Breite gemäß der bestimmten Richtung gemessen ist.

4. Kapsel nach einem der Ansprüche 1 bis 3, **dadurch gekennzeichnet, dass** sie eine Führungszone (63) umfasst, die den Kragen (11) gemäß der bestimmten Richtung von der ersten Seite des zentralen Punkts (C) jenseits des ersten und zweiten Vorsprungs (29, 31) verlängert.

5. Kapsel nach Anspruch 4, **dadurch gekennzeichnet, dass** das zweite Ende der Seitenwand (5) im Bereich des zentralen Punkts (C) eine vierte Breite aufweist, gemessen senkrecht zu der bestimmten Richtung gemäß einer Querrichtung, wobei die Führungszone (63) eine fünfte Breite aufweist, gemessen gemäß einer Querrichtung, die größer als die vierte Breite ist.

6. Einheit, umfassend eine Maschine für die Zubereitung eines Getränks (1) durch Kapselextraktion, und eine Kapsel (3) nach einem der vorangehenden Ansprüche.

7. Einheit nach Anspruch 6, **dadurch gekennzeichnet, dass** die Maschine umfasst:
- einen starren Teil (37),
- einen im Verhältnis zum starren Teil (37) zwischen einer geöffneten Stellung, in welcher die Kapsel (3) durch Schwerkraft in die Maschine (1) einsetzbar ist, und einer geschlossenen Stellung, in welcher der starre und bewegliche Teil (37, 39) die Kapsel (3) in einer Extraktionsstellung halten, in welcher ein Getränk durch Extraktion der Kapsel (3) zubereitbar ist, beweglichen Teil (39), wobei sich die Kapsel (3) in Extraktionsstellung in einer ersten bestimmten Höhe gemäß der vertikalen Richtung befindet,
- eine Einsetzvorrichtung (35) der Kapsel (3) durch Schwerkraft in die Maschine (1), wobei die Einsetzvorrichtung (35) Blockierorgane (49) umfasst, die mit den Vorsprüngen (29, 31) der Kapsel (3) zusammenarbeitet, um die Kapsel (3) in einer Mittelstellung zu blockieren,
wobei die zwei Vorsprünge (29, 31) von der ersten Seite des zentralen Punkts (C) gemäß der bestimmten Richtung in einem Abstand im Verhältnis zum zentralen Punkt (C) versetzt sind, der gewählt ist, damit sich die Kapsel (3) in Mittelstellung gemäß der vertikalen Richtung in einer zweiten Höhe befindet, inbegriffen zwischen der ersten Höhe minus 4 mm zum einen und der ersten Höhe plus 4 mm zum anderen.

8. Einheit nach Anspruch 7, **dadurch gekennzeichnet, dass** die Ladevorrichtung (35) zwei Gleitschienen (47) umfasst, die vorgesehen sind, um den Kragen (11) der Kapsel (3) bei ihrer Ladung durch Schwerkraft zu führen.

9. Einheit nach Anspruch 7 oder 8, **dadurch gekennzeichnet, dass** die zwei Blockierorgane (49) zwischen sich einen Durchgang aufweisen, der eine bestimmte Breite hat, wobei die erste und zweite Gerade (d1, d2) zwischen sich eine Breite aufweisen, die kleiner als die bestimmte Breite ist.

10. Einheit nach einem der Ansprüche 7 bis 9, **dadurch gekennzeichnet, dass** jede Gleitschiene (47) ein oberes Einführende (51) der Kapseln (3) und ein dem oberen Ende gegenüberliegendes unteres Ende (53) aufweist, wobei sich die Blockierorgane (49) in der Verlängerung der Gleitschienen (47) befinden und von den unteren Enden (53) der Gleitschienen (47) durch einen Raum (58) getrennt sind, der für den Durchgang des ersten und zweiten Vorsprungs (29, 31) vorgesehen ist.

11. Einheit nach einem der Ansprüche 7 bis 10, **dadurch gekennzeichnet, dass** der starre Teil (37) der Maschine (1) ein Gitter (41) aufweist, auf dem sich die Kapsel (3) in Extraktionsstellung abstützt, wobei die Blockierorgane (49) von dem Gitter (41) durch einen Spalt (56) getrennt sind, der für das Auswerfen durch Schwerkraft der Kapsel (3) nach Extraktion vorgesehen ist.

12. Einheit nach einem der Ansprüche 7 bis 11, **dadurch gekennzeichnet, dass** die Maschine (1) eine Fläche (73) umfasst, die vorgesehen ist, um eine untere Zone (72) des Kragens (11) zu stützen, wenn die Kapsel (3) in Mittelstellung ist.

13. Einheit nach einem der Ansprüche 7 bis 12, **dadurch gekennzeichnet, dass** sich die Extraktionsstellung der Kapsel (3) aus der Mittelstellung durch einer Fahrbetrieb gemäß einer bestimmten Richtung, vorzugsweise etwa horizontal, ableitet.

14. Einheit nach einem der Ansprüche 7 bis 13, **dadurch gekennzeichnet, dass** die Maschine (1) ausgebildet ist, damit die Kapsel (3) vom beweglichen Teil (39), das sich von seiner geöffneten Stellung in seine geschlossene Stellung verlagert, von der Mittelstellung in die Extraktionsstellung befördert wird.

## Claims

1. A capsule for extracting a drink, the capsule (3) comprising a tubular sidewall (5) having a central axis (X), a bottom (7) bound to a first axial end of the side wall (5), and a flange (11) extending around a second axial end of the side wall (5), the flange (11) extending in a front plane, wherein
- the flange (11) is included between the first and second straight lines (d1, d2) extending in the front plane, the first and second straight lines (d1, d2) being parallel with a same determined direction, all the flange (11) being located between these first and second straight lines (d1, d2), two opposite areas of the flange (11) being flush with the first and second straight lines (d1, d2),
**characterized in that**
- the capsule includes the first and second blocking lugs (29, 31) extending from the flange (11) beyond the first and second straight lines (d1, d2), respectively;
- the central axis (X) intercepts the front plane in a central point (C), the first and second lugs (29, 31) being shifted from a first side of the central point (C) along the determined direction, with a deviation greater than 1 mm relatively to the central point.

2. The capsule according to claim 1, **characterized in that** the flange (11) has first and second opposite straight edges (15, 17), substantially coinciding with the first and second straight lines (d1, d2).

3. The capsule according to claim 1 or 2, **characterized in that** the flange (11) has first and second side areas turned towards the first and second straight lines (d1, d2) and a lower area (72) located on a second side of the central point (C) along the determined direction, the second side being opposite to the first, first and second side areas having first and second widths respectively taken along a transverse direction perpendicular to the determined direction, the lower area (72) having a third width greater than the first and second widths, the third width being taken along the determined direction.

4. The capsule according to any of claims 1 to 3, **characterized in that** it comprises a guidance area (63) extending the flange (11) along the determined direction of the first side of the central point (C), beyond the first and second lugs (29, 31).

5. The capsule according to claim 4, **characterized in that** the second end of the side wall (5) has at the central point (C) a fourth width taken along a transverse direction perpendicular to the determined direction, the guidance area (63) having a fifth width taken along the transverse direction of a greater than the fourth width.

6. An assembly comprising a machine for preparing a drink (1) by extracting a capsule, and a capsule (3) according to any of the preceding claims.

7. The assembly according to claim 6, **characterized in that** the machine comprises:
- a fixed portion (37);
- a movable portion (39) relatively to the fixed portion (37), between an open position in which the capsule (3) may be loaded by gravity into the machine (1) and a closed position in which the fixed and movable portions (37, 39) maintain the capsule (3) in an extraction position in which a drink may be prepared by extraction from the capsule (3), the capsule (3) in the extraction position being located at a first height determined along the vertical direction;
- a device (35) for introducing the capsule (3) by gravity into the machine (1), the introduction device (35) comprising blocking members (49) cooperating with the lugs (29, 31) of the capsule (3) for blocking the capsule (3) in an intermediate position;
both lugs (29, 31) being shifted from the first side of the central point (C) along the determined direction, with a deviation relatively to the central point (C) selected so that in the intermediate position, the capsule (3) is located along the vertical direction at a second height comprise between the first height -4 mm on the one hand and the first height +4 mm on the other hand.

8. The assembly according to claim 7, **characterized in that** the loading device (35) comprises two slides (47) provided for guiding the flange (11) of the capsule (3) during its loading by gravity.

9. The assembly according to claim 7 or 8, **characterized in that** both blocking members (49) have between them a passage with a determined width, the first and second straight lines (d1, d2) having between them a width of less than said determined width.

10. The assembly according to any of claims 7 to 9, **characterized in that** each slide (47) has an upper end (51) for introducing the capsules (3) and a lower end (53) opposite to the upper end, the blocking members (49) being placed in the extension of the slides (47) and being separated from the lower ends (53) of the slides (47) by a space (58) provided for the passage of the first and second lugs (29, 31).

11. The assembly according to any of claims 7 to 10, **characterized in that** the fixed portion (37) of the machine (1) includes a grid (41) against which the capsule (3) is kept bearing in the extraction position, the blocking members (49) being separated from the grid (41) by an interstice (56) provided for discharging the capsule (3) by gravity after extraction.

12. The assembly according to any of claims 7 to 11, **characterized in that** the machine (1) comprises a surface (73) provided for supporting a lower area (72) of the flange (11) when the capsule (3) is in an intermediate position.

13. The assembly according to any of claims 7 to 12, **characterized in that** the extraction position of the capsule (3) is inferred from the intermediate position by a translation along a determined direction, preferentially substantially a horizontal direction.

14. The assembly according to any of claims 7 to 13, **characterized in that** the machine (1) is adapted so that the capsule (3) is driven from the intermediate position to the extraction position by the movable portion (39) moving from its open position to its closed position.
